# EUROPÄISCHE PATENTSCHRIFT

(11) **EP 2 574 881 B1**
(45) Veröffentlichungstag und Bekanntmachung des Hinweises auf die Patenterteilung: **05.10.2016**
(21) Anmeldenummer: 12191785.0
(22) Anmeldetag: 07.04.2009
(51) Int. Cl.: G06F 3/0484, B60K 35/00, B60K 37/06, G06F 3/0488, G01C 21/36

(54) **Verfahren zum Betrieb eines Bediensystems für ein Fahrzeug und Bediensystem für ein Fahrzeug**
Method for operating a control system for a vehicle and control system for a vehicle
Procédé de fonctionnement d'un système de commande pour un véhicule et système de commande pour un véhicule

(30) Priorität: 09.07.2008 DE 102008032377
(43) Veröffentlichungstag der Anmeldung: 03.04.2013
(62) Teilanmeldung aus: 09776520.0
(73) Patentinhaber: Volkswagen Aktiengesellschaft, 38440 Wolfsburg (DE)
(72) Erfinder: Wäller, Christoph, 38106 Braunschweig (DE)

(56) Entgegenhaltungen:
- WO-A-2009/004525
- DE-A1-102006 037 156
- US-A1- 2004 178 994

## Beschreibung

Die vorliegende Erfindung betrifft Verfahren zum Betrieb eines Bediensystems für ein Fahrzeug und ein Bediensystem für ein Fahrzeug und insbesondere ein Bediensystem, welches eine grafische Anzeigeeinheit und eine berührungssensitive Oberfläche umfasst.

In Fahrzeugen, wie zum Beispiel Personenkraftwagen oder Lastkraftwagen, werden eine Vielzahl von Bedienfunktionen, wie zum Beispiel eine Bedienung eines Navigationssystems, eine Bedienung eines Audio- und Videounterhaltungssystems oder eines Belüftungssystems des Fahrzeugs usw., mit Hilfe eines Bediensystems bedient, welches eine grafische Anzeigeeinheit und eine berührungssensitive Oberfläche, einen sogenannten Touchscreen, umfasst. Dazu werden auf dem Touchscreen häufig eine oder mehrere Bedienflächen, wie zum Beispiel Bedienknöpfe, so genannte Buttons, dargestellt, welche durch Berühren der berührungssensitiven Oberfläche mit Hilfe eines Fingers betätigt werden können. Aufgrund der meist beschränkten Größe des Touchscreens im Fahrzeug weisen derartige Bedienflächen eine geringe Größe auf. In vielen Bediensituationen, wie zum Beispiel während der Fahrt, sind diese Bedienflächen daher für den Benutzer oder Fahrer des Fahrzeugs nur schwer zu treffen und es kommt zu sogenannten Fehltreffern. Jeder Fehltreffer erfordert anschließend einen erneuten Bedienversuch. Hierbei besteht jedoch ein ebenso großes Risiko wie beim ersten Versuch, die Bedienfläche zu verfehlen. Dies kann zu einer negativen Produktwahrnehmung führen und bedingt aufgrund der daraus resultierenden verlängerten Gesamtbediendauer ein erhöhtes Risiko für die Fahrsicherheit, da der Fahrer stärker und für einen längeren Zeitraum von den Geschehnissen im Straßenverkehr abgelenkt wird.

Die US 2004/0178994 A1 betrifft ein Verfahren zum Erhöhen einer einfachen Verwendung einer Touchscreen-Anwendung durch dynamisches Anpassen einer Größe von Touchscreen-Eingabebereichen. Bei dem Verfahren werden Koordinaten von Berührungen des Touchscreen in Abhängigkeit einer Benutzerinteraktion gesammelt und die Berührungskoordinaten analysiert, um zu bestimmen, wie oft der Benutzer die Eingabebereiche verfehlt hat. Wenn die Anzahl von verfehlten Berührungen einen vorbestimmten Schwellenwert erreicht, werden sowohl eine Größe eines sichtbaren Bereichs als auch eines anklickbaren Bereichs von mindestens einer der Eingabebereiche und möglicherweise aller Bereiche von ähnlicher Größe oder Art vergrößert, sodass die Eingabebereiche leichter zu berühren sind.

Weiterhin ist aus der DE 10 2006 037 156 A1 eine interaktive Bedienvorrichtung und ein Verfahren zum Betreiben der interaktiven Bedienvorrichtung bekannt. Graphische Informationen werden auf einer Anzeigevorrichtung angezeigt und Sensorinformationen empfangen. Eine Bedienaktion wird aktiviert, wenn anhand der Sensorinformation ermittelt wird, dass sich ein Körperteil eines Benutzers innerhalb eines Aktivierungsbereichs befindet, welcher räumlich zu einem Darstellungsgebiet eines Bedienelements auf der Anzeigevorrichtung festgelegt ist, dem die Bedienaktion zugeordnet ist. Die empfangenen Sensorinformationen umfassen Benutzerinformationen, welche zum Ermitteln einer Bedienabsicht für das mindestens eine Bedienelement zeitlich vor einem Aktivieren der Bedienaktion ausgewertet werden. Die auf der Anzeigevorrichtung dargestellten Informationen werden in Abhängigkeit von der ermittelten Bedienabsicht angepasst, sodass das mindestens eine Bedienelement optimiert für das Aktivieren der dem Bedienelement zugeordneten Bedienaktion dargestellt wird. Beispielsweise können Bedienelemente, welche sich nahe einer Position eines Bedienungs-Spotlights befinden, vergrößert dargestellt werden.

Die US 2004/0178994 A1 betrifft ein Verfahren zum Verbessern einer einfachen Nutzung einer Anwendung mit einem berührungssensitiven Bildschirm durch dynamisches Ändern einer Größe von Eingabebereichen auf dem berührungssensitiven Bildschirm. Die Anwendung weist eine Benutzerschnittstelle auf, welche einen oder mehrere Eingabebereiche auf der berührungssensitven Anzeige aufweist. Jeder der Eingabebereiche weist einen sichtbaren Bereich und einen anklickbaren Bereich auf. Eine Benutzerberührung des anklickbaren Bereichs aktiviert den entsprechenden Eingabebereich. Bei dem Verfahren werden Berührkoordinaten auf der Anzeige in Abhängigkeit von einer Benutzerinteraktion gesammelt und die Berührungskoordinaten analysiert, um zu bestimmen, wie oft der Benutzer die Eingabebereiche verfehlt hat. Wenn die Anzahl verfehlter Berührungen einen vorbestimmten Schwellenwert erreicht, wird die Größe des sichtbaren Bereichs und des anklickbaren Bereichs von zumindest einem der Eingabebereiche und möglicherweise allen Bereichen einer ähnlichen Größe oder Art vergrößert, sodass die Eingabebereiche einfacher zu berühren sind.

Die DE 102 006 037 156 A1 betrifft eine interaktive Bedienvorrichtung mit einer Anzeigevorrichtung und ein Verfahren zum Betreiben der interaktiven Bedienvorrichtung. Grafische Informationen werden auf der Anzeigevorrichtung angezeigt und Sensorinformationen empfangen. Eine Bedienaktion wird aktiviert, wenn anhand der Sensorinformationen ermittelt wird, dass ein Körperteil eines Nutzers sich innerhalb eines Aktivierungsbereichs befindet, welcher räumlich relativ zu einem Darstellungsgebiet eines Bedienelements auf der Anzeigevorrichtung festgelegt ist, dem die Bedienaktion zugeordnet ist. Die empfangenen Sensorinformationen umfassen Nutzerinformationen, welche zum Ermitteln einer Bedienabsicht für das mindestens eine Bedienelement zeitlich vor einem Aktivieren der Bedienaktion ausgewertet werden. Die auf der Anzeigevorrichtung dargestellten Informationen werden in Abhängigkeit von der ermittelten Bedienabsicht angepasst, sodass das mindestens eine Bedienelement optimiert für das Aktivieren der dem Bedienelement zugeordneten Bedienaktion dargestellt wird.

Die nachveröffentlichte Druckschrift WO 2009/004525 A2 betrifft eine Vorrichtung zum Bereitstellen eines Objektauswahlmechanismus für Berührungsbildschirmvorrichtungen. Bei einer Ausführungsform stellt die Berührungsbildschirmanzeige eine übliche Benutzerschnittstellenkomponente in Form einer Bildlaufleiste dar. Als Antwort auf eine Erfassung eines Berührereignisses nahe der Bildlaufleiste, z.B. ein nahe der Bildlaufleiste erfasster Fehltreffer, wird eine modifizierte Benutzerschnittstellenkomponente dargestellt. Eine modifizierte Bildlaufleiste kann in einem vergrößerten Maßstab dargestellt werden.

Aufgabe dieser Erfindung ist daher, die Bedienung eines derartigen Bediensystems mit einem sogenannten Touchscreen zu verbessern.

Diese Aufgabe wird erfindungsgemäß durch ein Verfahren zum Betrieb eines Bediensystems für ein Fahrzeug nach Anspruch 1 und ein Bediensystem für ein Fahrzeug nach Anspruch 4 gelöst. Die abhängigen Ansprüche definieren bevorzugte und vorteilhafte Ausführungsformen der Erfindung.

Erfindungsgemäß wird ein Verfahren zum Betrieb eines Bediensystems für ein Fahrzeug bereitgestellt. Das Bediensystem umfasst eine grafische Anzeigeeinheit und eine berührungssensitive Oberfläche. Die grafische Anzeigeeinheit und die berührungssensitive Oberfläche können beispielsweise als ein sogenannter Touchscreen ausgebildet sein. Dabei sind Koordinaten von auf der Anzeigeeinheit dargestellten Informationen Koordinaten der berührungssensitiven Oberfläche zugeordnet. Gemäß dem Verfahren wird mindestens eine Bedienfläche auf der Anzeigeeinheit dargestellt. Die Bedienfläche ist zum Betätigen einer Bedienfunktion vorgesehen, indem ein entsprechender Bereich der berührungssensitiven Oberfläche von einem Benutzer berührt wird. Bei dem Verfahren wird eine Berührung der berührungssensitiven Oberfläche durch den Benutzer erfasst und durch Vergleichen der Koordinaten der Berührung mit den Koordinaten der mindestens einen Bedienoberfläche bestimmt, ob die mindestens eine Bedienoberfläche bei der Berührung getroffen wurde. Wenn keine Bedienfläche getroffen wurde, wird die mindestens eine Bedienfläche vergrößert dargestellt. Genauer gesagt bedeutet dies, dass, wenn nur eine Bedienfläche dargestellt wurde, diese Bedienfläche vergrößert dargestellt wird, wenn sie nicht getroffen wurde, und dass, wenn mehrere Bedienflächen dargestellt wurden, eine oder mehrere der Bedienflächen vergrößert dargestellt werden, wenn keine der mehreren Bedienflächen getroffen wurde.

Wurden bei einem Bedienversuch durch den Benutzer die Bedienflächen verfehlt, so werden eine oder mehrere der Bedienflächen vergrößert dargestellt, so dass bei einem zweiten Versuch eine Trefferwahrscheinlichkeit vergrößert wird. Sollte auch bei einem zweiten Versuch kein Treffer vorliegen, so können die Bedienflächen weiter vergrößert dargestellt werden, um eine Trefferwahrscheinlichkeit weiter zu erhöhen. Eine von vornherein vergrößerte Darstellung der Bedienflächen hätte aufgrund der begrenzten Größe der gesamten Anzeigeeinheit eine Verringerung der insgesamt darstellbaren Informationen zur Folge. Erkennt hingegen das Bediensystem aufgrund des ersten Fehltreffers, dass der Benutzer derzeit eine Bedienung der Bedienflächen vornehmen möchte, ist eine Verringerung der insgesamt dargestellten Informationsmenge akzeptabel, um die Trefferwahrscheinlichkeit zu erhöhen.

Weiterhin wird bei dem Verfahren eine Bedienfläche, beispielsweise die den Berührkoordinaten nächstliegende Bedienfläche, so stark vergrößert, dass sie die Koordinaten der Berührung umfasst. Berührt der Benutzer bei seinem zweiten Versuch die gleichen Koordinaten wie bei seinem ersten Versuch, so führt dies im zweiten Versuch zu einem Treffer.

Gemäß einer Ausführungsform des Verfahrens kann eine Vergrößerung der mindestens einen Bedienfläche in der vergrößerten Darstellung in Abhängigkeit von einer Entfernung der Koordinaten der mindestens einen Bedienfläche zu den Koordinaten der Berührung bestimmt werden. So kann beispielsweise bei einer großen Entfernung der Koordinaten einer Bedienfläche zu den Koordinaten der Berührung eine kleine Vergrößerung gewählt werden, wohingegen bei einer geringen Entfernung der Koordinaten einer Bedienfläche zu den Koordinaten der Berührung eine große Vergrößerung gewählt werden kann. Da anzunehmen ist, dass der Benutzer die gewünschte Bedienfläche nur geringfügig verfehlt hat, kann eine der Berührung nahe liegende Bedienfläche stark vergrößert werden, wohingegen Bedienflächen, welche von den Berührkoordinaten weiter entfernt sind, weniger stark vergrößert werden, da der Benutzer vermutlich die näher liegende Bedienfläche treffen wollte.

Alternativ oder zusätzlich können, zum Beispiel wenn die Koordinaten der Berührung von allen Bedienflächen verhältnismäßig weit entfernt sind, alle Bedienflächen gleichmäßig vergrößert werden, um bei einem zweiten Versuch eine erhöhte Trefferwahrscheinlichkeit zu erreichen.

Bei dem zuvor beschriebenen Verfahren wird eine Häufigkeit des vergrößerten Darstellens der mindestens einen Bedienfläche bestimmt. Die Bestimmung kann beispielsweise durch das Bediensystem erfolgen. In Abhängigkeit von der Häufigkeit kann die mindestens eine Bedienfläche dann vergrößert dargestellt werden. Auf diese Art und Weise "lernt" das Bediensystem im Laufe der Zeit, welche Bedienflächen häufiger betätigt werden und kann durch vergrößertes Darstellen dieser Bedienflächen eine erhöhte Trefferwahrscheinlichkeit erreichen.

Gemäß einer Ausführungsform wird die mindestens eine Bedienfläche in Abhängigkeit eines Zustands des Bediensystems vergrößert dargestellt. Der Zustand des Bediensystems kann durch Eingaben des Benutzers verändert werden. So kann beispielsweise in Abhängigkeit eines aktuellen Bedienkontexts, wie zum Beispiel einem Zustand einer Anwendung des Bediensystems oder des Gesamtzustandes des Bediensystems, bestimmt werden, welche Funktion am wahrscheinlichsten bedient werden soll und die Bedienfläche, welche dieser Funktion zugeordnet ist, entsprechend vergrößert dargestellt werden. So kann beispielsweise im Fall einer Anwendung eines Navigationssystems nach einer Eingabe eines Navigationsziels eine Bedienfläche zum Starten einer Zielführung vergrößert dargestellt werden, da es üblicherweise nach der Eingabe des Navigationsziels wahrscheinlich ist, dass nun die Zielführung gestartet werden soll. Durch Vergrößern der entsprechenden Bedienfläche kann ein Fehltreffer bei einem Versuch, die Bedienfläche zu berühren, mit großer Wahrscheinlichkeit verringert werden.

Erfindungsgemäß wird ferner ein Bediensystem für ein Fahrzeug bereitgestellt. Das Bediensystem umfasst eine grafische Anzeigeeinheit, welche ausgestaltet ist, eine Information für einen Benutzer darzustellen, eine berührungssensitive Oberfläche und eine Steuereinheit. Die berührungssensitive Oberfläche ist derart ausgestaltet, dass sie eine Berührung durch den Benutzer erfassen kann und der Steuereinheit entsprechende Koordinaten der Berührung bereitstellen kann. Die Koordinaten der berührungssensitiven Oberfläche sind Koordinaten von auf der Anzeigeeinheit dargestellten Informationen zugeordnet. Die Steuereinheit ist mit der Anzeigeeinheit und der berührungssensitiven Oberfläche gekoppelt. Die Steuereinheit ist in der Lage, mindestens eine Bedienfläche, welche für eine Berührung durch den Benutzer zum Betätigen einer Bedienfunktion vorgesehen ist, auf der Anzeigeeinheit darzustellen. Bei einer Berührung der berührungssensitiven Oberfläche durch den Benutzer werden Berührkoordinaten von der berührungssensitiven Oberfläche zu der Steuereinheit übertragen und die Steuereinheit bestimmt, ob die mindestens eine Bedienfläche bei der Berührung getroffen wurde, indem sie die Koordinaten der Berührung mit den Koordinaten der mindestens einen Bedienfläche vergleicht. Werden mehrere Bedienflächen auf der Anzeigeeinheit dargestellt, wird für jede Bedienfläche durch Vergleich der Koordinaten der jeweiligen Bedienfläche mit den Koordinaten der Berührung bestimmt, ob die Bedienfläche getroffen wurde. Wenn keine Bedienfläche getroffen wurde, stellt die Steuereinheit mindestens eine Bedienfläche vergrößert auf der Anzeigeeinheit dar. Eine Bedienfläche, beispielsweise die den Berührkoordinaten nächstliegende Bedienfläche, wird dabei so stark vergrößert, dass sie die Koordinaten der Berührung umfasst. Berührt der Benutzer bei seinem zweiten Versuch die gleichen Koordinaten wie bei seinem ersten Versuch, so führt dies im zweiten Versuch zu einem Treffer.

Ein derartiges Bediensystem ist zum Durchführen der zuvor beschriebenen Ausführungsformen des Verfahrens zum Betrieb eines Bediensystems für ein Fahrzeug geeignet und umfasst daher die zuvor beschriebenen Vorteile.

Die vorliegende Erfindung wird nachfolgend unter Bezugnahme auf die Zeichnungen anhand bevorzugter Ausführungsformen erläutert.
Fig. 1 zeigt eine schematische Blockdarstellung eines Bediensystems gemäß einer Ausführungsform der vorliegenden Erfindung.
Fig. 2 zeigt schematisch den Betrieb des Bediensystems der Fig. 1 gemäß einer Ausführungsform der Erfindung.
Fig. 3 zeigt schematisch den Betrieb des Bediensystems der Fig. 1 gemäß einer weiteren Ausführungsform der Erfindung.
Fig. 4 zeigt schematisch den Betrieb des Bediensystems der Fig. 1 gemäß noch einer weiteren Ausführungsform der Erfindung.

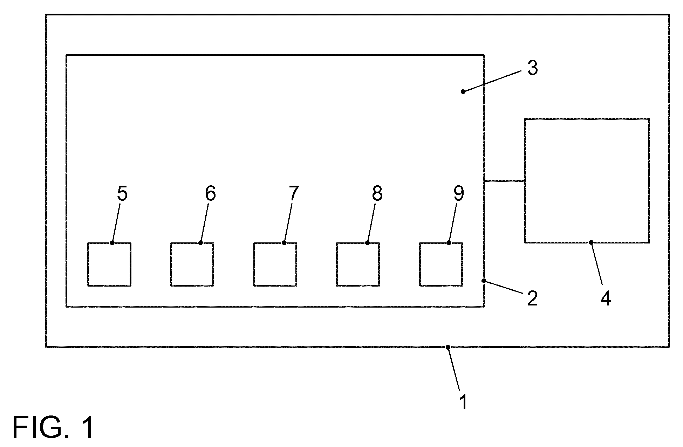

Fig. 1 zeigt ein Bediensystem 1 für ein Fahrzeug. Das Bediensystem 1 kann beispielsweise ein Bediensystem für ein Navigationssystem des Fahrzeugs oder für ein Audio-/Videosystem des Fahrzeugs sein. Das Bediensystem 1 umfasst eine grafische Anzeigeeinheit 2, auf welcher Informationen für einen Benutzer darstellbar sind. Die grafische Anzeigeeinheit 2 kann beispielsweise ein Bildschirm oder eine Flüssigkristallanzeige umfassen. Das Bediensystem 1 umfasst ferner eine berührungssensitive Oberfläche 3, welche auf einer Oberfläche der grafischen Anzeigeeinheit 2 angebracht ist, und eine Steuereinheit 4, welche mit der Anzeigeeinheit 2 und der berührungssensitiven Oberfläche 3 gekoppelt sind. Die berührungssensitive Oberfläche 3 ist in der Lage, eine Berührung der berührungssensitiven Oberfläche 3 durch den Benutzer zu erfassen und entsprechende Koordinaten als Berührkoordinaten der Steuereinheit 4 bereitzustellen. Informationen, welche auf der grafischen Anzeigeeinheit 2 von der Steuereinheit 4 dargestellt werden können, besitzen Koordinaten auf der Anzeigeeinheit 2, welche den Koordinaten der berührungssensitiven Oberfläche 3 zugeordnet sind. So wird der Steuereinheit 4 ermöglicht, zu bestimmen, ob eine Berührung der berührungssensitiven Oberfläche 3 an einer Stelle erfolgt, an welcher eine vorbestimmte Information auf der Anzeigeeinheit 2 dargestellt ist, indem Koordinaten der dargestellten Information mit Koordinaten der Berührung verglichen werden. Für eine Bedienung des Bediensystems 1 können beispielsweise, wie in Fig. 1 dargestellt, fünf Bedienflächen 5-9 auf der Anzeigeeinheit 2 dargestellt werden. Die Koordinaten der dargestellten Bedienflächen 5-9 sind der Steuereinheit 4 bekannt und bei einer Berührung der berührungssensitiven Oberfläche 3 liefert die berührungssensitive Oberfläche 3 Koordinaten der Berührung zu der Steuereinheit 4. Durch Vergleich der Koordinaten von der berührungssensitiven Oberfläche 3 kann die Steuereinheit 4 bestimmen, ob eine Berührung in einem Bereich von einer der Bedienflächen 5-9 stattgefunden hat oder nicht.

Wenn durch den Koordinatenvergleich festgestellt wird, dass eine der Bedienflächen 5-9 berührt wurde, so wird eine entsprechende Information von der Steuereinheit 4 einem (nicht gezeigten) weiteren System des Bediensystems 1, wie zum Beispiel einem Navigationssystem, zur weiteren Verarbeitung bereitgestellt.

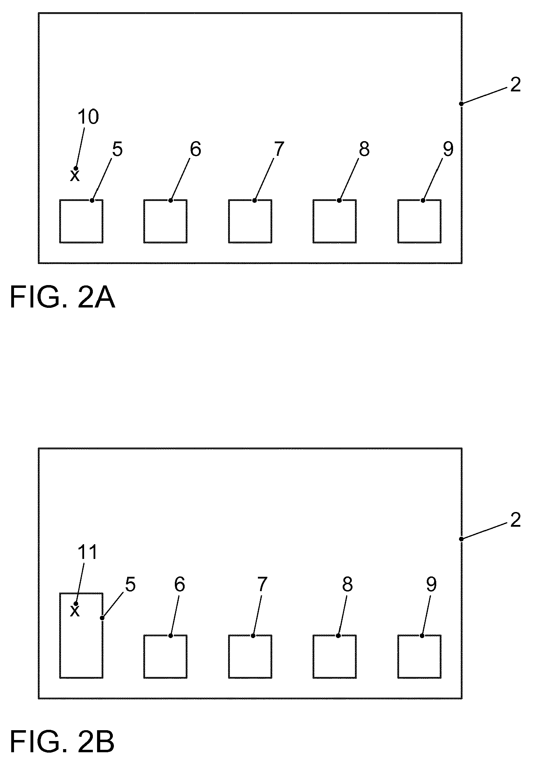

Ergibt hingegen der Koordinatenvergleich, dass keine der Bedienflächen 5-9 berührt wurde, so liegt ein sogenannter Fehltreffer vor, d.h. der Benutzer des Bediensystems 1 hat vermutlich versucht, eine der Bedienflächen 5-9 zu berühren, hat dies jedoch nicht geschafft, sondern einen Bereich außerhalb der Bedienflächen 5-9 berührt. Ursache hierfür kann beispielsweise sein, dass die Berührung durch einen Fahrer des Fahrzeugs stattgefunden hat und der Fahrer des Fahrzeugs nur einen kurzen Blick auf die Anzeigeeinheit 2 geworfen hat, sich danach wieder den Geschehnissen im Straßenverkehr zugewendet hat, und die Berührung der berührungssensitiven Oberfläche 3 nachfolgend blind durchgeführt hat, wodurch der Fehltreffer zustande kam. Der Fehltreffer kann auch aufgrund starker Erschütterungen des Fahrzeugs durch einen schlechten Fahrbahnbelag hervorgerufen worden sein. Da das Bediensystem im Fall des Fehltreffers trotz der Berührung der berührungssensitiven Oberfläche nicht die gewünschte Wirkung zeigt, wird der Fahrer oder Benutzer des Fahrzeugs einen zweiten Bedienversuch unternehmen. Um den Fahrer oder Benutzer bei diesem zweiten Versuch zu unterstützen, werden, wie nachfolgend im Zusammenhang mit den Figuren 2-4 gezeigt, vergrößerte Darstellungen der Bedienflächen 5-9 auf der Anzeigeeinheit 2 in Abhängigkeit von der Art des Fehltreffers angezeigt.

In Fig. 2A sind auf der Anzeigeeinheit 2 die nicht vergrößert dargestellten Bedienflächen 5-9 dargestellt. Eine erste Berührung des Benutzers wird an der mit einem "X" bezeichneten Berührposition 10 erfasst. Durch Koordinatenvergleich der Berührposition 10 mit den Koordinaten der Bedienflächen 5-9 ergibt sich, dass keine der Bedienflächen 5-9 berührt wurde. Daraufhin wird der Abstand der Berührposition 10 zu den Koordinaten der Bedienflächen 5-9 bestimmt. Der Abstand der Berührposition 10 zur Bedienfläche 5 kann beispielsweise durch Bestimmen aller Abstände von allen Koordinaten der Bedienfläche 5 zu den Koordinaten der Berührposition 10 und einer anschließenden Mittelung erfolgen. Alternativ kann beispielsweise ein Mittelpunkt der Bedienfläche 5 bestimmt werden und ein Abstand der Koordinaten des Mittelpunktes der Bedienfläche 5 zu den Koordinaten der Berührposition 10 bestimmt werden. Auf vergleichbare Art und Weise werden die Abstände der Bedienflächen 6-9 zu der Berührposition 10 bestimmt. Da in Fig. 2A der Abstand der Berührposition 10 zu der Bedienfläche 5 verglichen mit den Abständen der Berührposition 10 zu den Bedienflächen 6-9 erheblich geringer ist und darüber hinaus der absolute Abstand der Berührposition 10 zu der Bedienfläche 5 sehr gering ist, kann davon ausgegangen werden, dass der Benutzer die Bedienfläche 5 berühren wollte. Daher steuert die Steuereinheit 4 die Anzeigeeinheit 2 derart an, dass die Bedienfläche 5, wie in Fig. 2B gezeigt, vergrößert dargestellt wird. Die Bedienfläche 5 ist so stark vergrößert, dass sie nun die Koordinaten der Berührposition 10 der ersten Berührung des Benutzers umfassen würde. Zusätzlich ist in Fig. 2B eine Berührposition 11 eines zweiten Berührversuchs des Benutzers dargestellt, welcher zu einem Treffer führt.

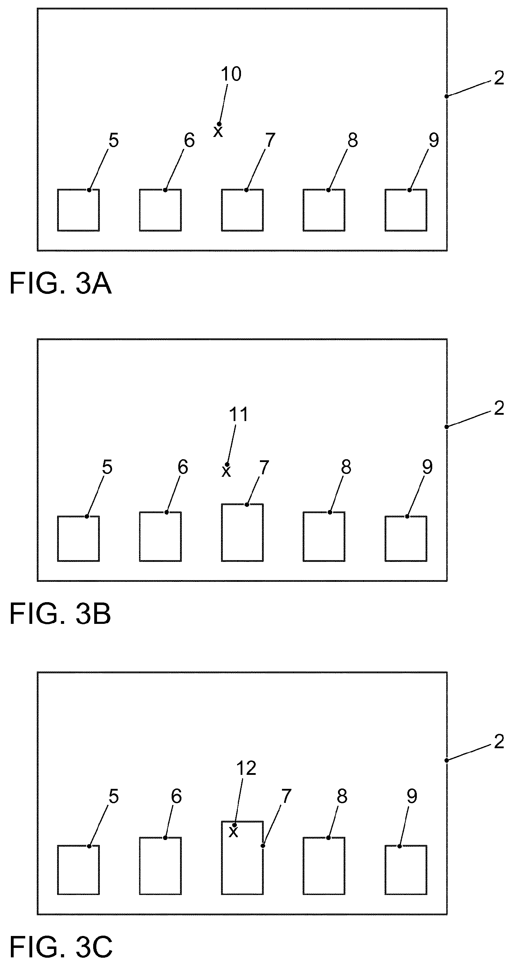

In Fig. 3A ist wiederum eine Darstellung der nicht vergrößerten Bedienflächen 5-9 auf der Anzeigeeinheit 2 dargestellt. Ein erster Bedienversuch des Benutzers hat eine Berührung der berührungssensitiven Oberfläche 3 an der Berührposition 10 ergeben. Da die Berührposition 10 verglichen mit der Berührposition 10 der Figur 2A erheblich weiter von den Bedienflächen 5-9 aufgetreten ist und der Abstand der Berührposition 10 zu der Bedienfläche 6 und der Bedienfläche 7 nur unwesentlich unterschiedlich ist, wird nicht, wie in Fig. 2B, nur die nächstliegende Bedienfläche (was im vorliegenden Beispiel die Bedienfläche 7 wäre) vergrößert gezeigt, sondern, wie in Fig. 3B gezeigt, alle Bedienflächen 5-9 vergrößert dargestellt. Dabei werden die Bedienflächen, welche einen geringeren Abstand zu der Berührposition 10 aufweisen, stärker vergrößert, als Bedienflächen, welche einen größeren Abstand zu der Berührposition 10 aufweisen. Dementsprechend wird die Bedienfläche 7 am stärksten vergrößert, wohingegen die Bedienfläche 9 am wenigsten stark vergrößert wird. Mit den in Fig. 3B dargestellten vergrößerten Bedienflächen 5-9 unternimmt der Benutzer einen zweiten Bedienversuch. Dabei berührt er die berührungssensitive Oberfläche an der Berührposition 11. Wiederum liegt kein Treffer vor, da die Koordinaten der Berührposition 11 mit keiner der Koordinaten der Bedienflächen 5-9 übereinstimmen. Daraufhin erzeugt die Steuereinheit 4 eine noch weiter vergrößerte Darstellung der Bedienflächen 5-9, wie in Fig. 3C dargestellt. Wiederum werden die Bedienflächen, welche der Berührposition 11 am nächsten liegen, stärker vergrößert als die Bedienflächen, welche von der Berührposition 11 weiter entfernt liegen. Somit hat, wie in Fig. 3C dargestellt, nun die Bedienfläche 7 die größte Ausdehnung und wird, wie in Fig. 3C dargestellt, bei einem dritten Berührversuch des Benutzers an der Berührposition 12 getroffen, womit der Bedienvorgang abgeschlossen ist.

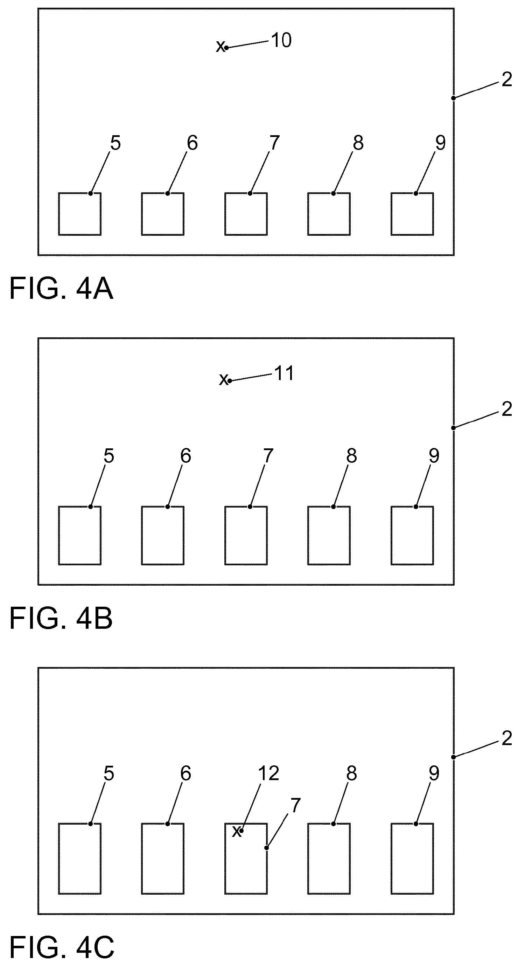

Fig. 4A zeigt die nicht vergrößerten Bedienflächen 5-9 auf der Anzeigeeinheit 2 sowie eine Berührposition 10 eines ersten Bedienversuchs des Benutzers. Wiederum liegt kein Treffer bei diesem ersten Berührversuch vor. Da die Berührposition 10 in diesem Fall zu allen Bedienflächen 5-9 einen sehr großen Abstand aufweist, werden von der Steuereinheit 4 gleichmäßig vergrößerte Bedienflächen 5-9 auf der Anzeigeeinheit 2, wie in Fig. 4B dargestellt, angezeigt. Eine zweite Bedienung des Benutzers führt zu einer Berührung an der Berührposition 11. Da auch diese Berührung keine Treffer ergibt und immer noch einen sehr großen Abstand zu allen Bedienflächen 5-9 aufweist, werden die Bedienflächen 5-9, wie in Fig. 4C gezeigt, nochmals gleichmäßig vergrößert zur Anzeige gebracht. Eine dritte Berührung an der Berührposition 12 führt nun letztendlich zu einem Treffer.

Die zuvor gezeigten Ausführungsformen zur Vergrößerung der Bedienflächen 5-9 können auch miteinander kombiniert verwendet werden. Darüber hinaus ist es auch möglich, dass bei einer Berührung, welche zu keinem Fehltreffer führte, grundsätzlich alle Bedienflächen zunächst gleichmäßig vergrößert werden. Gemäß der Erfindung wird die Häufigkeit einer Vergrößerung einer Bedienfläche von der Steuereinheit 4 bestimmt und gespeichert und über einen längeren Zeitraum integriert, so dass die Bedienflächen, die häufig vergrößert wurden, nach einiger Zeit grundsätzlich vergrößert auf der Anzeigeeinheit 2 dargestellt werden.

Außerdem ist es möglich, die vergrößerte Darstellung in Abhängigkeit von einem Bedienkontext anzuzeigen. Der Bedienkontext kann zum Beispiel einen Zustand einer Anwendung, z.B. einer Navigationsanwendung, umfassen. In Abhängigkeit von dem Bedienkontext kann dann eine Bedienfläche, welche in dem jeweiligen Zustand eine größte Bedienwahrscheinlichkeit aufweist, vergrößert angezeigt werden. So kann beispielsweise nach einer Eingabe eines Navigationsziels bei einer Navigationsanwendung die Bedienfläche zum Starten einer Zielführung vergrößert dargestellt werden, da es nach Abschluss der Eingabe des Navigationsziels sehr wahrscheinlich ist, dass nun die Zielführung zu starten ist. Dadurch kann die Anzahl von Fehltreffern wirkungsvoll verringert werden, ohne von vornherein einen großen Anteil der Fläche der Anzeigeeinheit 2 für die Bedienflächen zu verwenden.

## Patentansprüche

1. Verfahren zum Betrieb eines Bediensystems für ein Fahrzeug, wobei das Bediensystem (1) eine grafische Anzeigeeinheit (2) und eine berührungssensitive Oberfläche (3) umfasst, wobei Koordinaten von auf der Anzeigeeinheit (2) dargestellten Informationen Koordinaten der berührungssensitiven Oberfläche (3) zugeordnet sind, wobei das Verfahren umfasst:
- Darstellen mindestens einer Bedienfläche (5-9) auf der Anzeigeeinheit (2), wobei die mindestens eine Bedienfläche (5-9) für eine Berührung (10-12) durch einen Benutzer zum Betätigen einer Bedienfunktion vorgesehen ist,
- Erfassen einer Berührung (10-12) der berührungssensitiven Oberfläche (3) durch den Benutzer,
- Bestimmen, ob die mindestens eine Bedienfläche (5-9) bei der Berührung (10-12) getroffen wurde, indem die Koordinaten der Berührung (10-12) mit den Koordinaten der mindestens einen Bedienfläche (5-9) verglichen werden, und
- vergrößertes Darstellen der mindestens einen Bedienfläche (5-9), wenn keine Bedienfläche (5-9) getroffen wurde, wobei genau eine Bedienfläche (5) derart vergrößert dargestellt wird, dass sie die Koordinaten der Berührung (10) umfasst,
**dadurch gekennzeichnet, dass** das Bediensystem (1) eine Häufigkeit des vergrößerten Darstellens der mindestens einen Bedienfläche (5-9) bestimmt, speichert und über einen vorgegebenen Zeitraum integriert und die Bedienflächen in Abhängigkeit von der integrierten Häufigkeit grundsätzlich vergrößert darstellt.

2. Verfahren nach Anspruch 1, **dadurch gekennzeichnet, dass** die genau eine Bedienfläche (5) die den Koordinaten der Berührung (10-12) nächstliegende Bedienfläche (5) ist.

3. Verfahren nachAnspruch 1 oder 2, **dadurch gekennzeichnet, dass** das Bediensystem (1) die mindestens eine Bedienfläche (5-9) weiter vergrößert darstellt, wenn bei der Berührung (10-12) und bei einer weiteren Berührung (10-12) keine Bedienfläche (5-9) getroffen wurde.

4. Bediensystem für ein Fahrzeug, umfassend:
eine grafische Anzeigeeinheit (2), welche ausgestaltet ist, eine Information für einen Benutzer darzustellen,
eine berührungssensitiven Oberfläche (3), welche ausgestaltet ist, eine Berührung (10-12) durch den Benutzer zu erfassen, wobei Koordinaten von auf der Anzeigeeinheit (2) dargestellten Informationen Koordinaten der berührungssensitiven Oberfläche (3) zugeordnet sind, und
eine Steuereinheit (4), welche mit der Anzeigeeinheit (2) und der berührungssensitiven Oberfläche (3) gekoppelt ist und welche ausgestaltet ist,
- mindestens eine Bedienfläche (5-9) auf der Anzeigeeinheit (2) darzustellen, wobei die mindestens eine Bedienfläche (5-9) für eine Berührung (10-12) durch den Benutzer zum Betätigen einer Bedienfunktion vorgesehen ist,
- eine Berührung (10-12) der berührungssensitiven Oberfläche (3) durch den Benutzer zu erfassen,
- eine Bestimmung durchzuführen, ob die mindestens eine Bedienfläche (5-9) bei der Berührung (10-12) getroffen wurde, indem sie die Koordinaten der Berührung (10-12) mit den Koordinaten der mindestens einen Bedienfläche (5-9) vergleicht, und
- die mindestens eine Bedienfläche (5-9) vergrößert auf der Anzeigeeinheit (2) darzustellen, wenn bestimmt wurde, dass keine Bedienfläche (5-9) getroffen wurde, wobei genau eine Bedienfläche (5) derart vergrößert dargestellt wird, dass sie die Koordinaten der Berührung (10) umfasst,
**dadurch gekennzeichnet, dass** die Steuereinheit (4) ausgestaltet ist, eine Häufigkeit des vergrößerten Darstellens der mindestens einen Bedienfläche (5-9) zu bestimmen, zu speichern und über einen vorgegebenen Zeitraum zu integrieren und die Bedienflächen in Abhängigkeit von der integrierten Häufigkeit grundsätzlich vergrößert darzustellen.

5. Bediensystem nach Anspruch 4, **dadurch gekennzeichnet, dass** das Bediensystem (1) zum Durchführen des Verfahrens nach einem der Ansprüche 2-3 ausgestaltet ist.

## Claims

1. Method for operating an operator control system for a vehicle, wherein the operator control system (1) comprises a graphical display unit (2) and a touch-sensitive interface (3), wherein coordinates from information presented on the display unit (2) are associated with coordinates of the touch-sensitive interface (3), wherein the method comprises:
- presentation of at least one operator control panel (5-9) on the display unit (2), wherein the at least one operator control panel (5-9) is provided for a user to touch (10-12) in order to operate an operator control function,
- detection of a touch (10-12) on the touch-sensitive interface (3) by the user,
- determination of whether the at least one operator control panel (5-9) has been hit during the touch (10-12) by virtue of the coordinates of the touch (10-12) being compared with the coordinates of the at least one operator control panel (5-9), and
- enlarged presentation of the at least one operator control panel (5-9) if no operator control panel (5-9) has been hit, wherein precisely one operator control panel (5) is presented in enlarged form such that it comprises the coordinates of the touch (10),
**characterized in that** the operator control system (1) determines a frequency for the enlarged presentation of the at least one operator control panel (5-9), stores said frequency and integrates it over a predetermined time period and presents the operator control panels in principle in enlarged form on the basis of the integrated frequency.

2. Method according to Claim 1, **characterized in that** the precisely one operator control panel (5) is the operator control panel (5) closest to the coordinates of the touch (10-12).

3. Method according to Claim 1 or 2, **characterized in that** the operator control system (1) presents the at least one operator control panel (5-9) in further enlarged form if no operator control panel (5-9) has been hit during the touch (10-12) and during a further touch (10-12).

4. Operator control system for a vehicle, comprising:
a graphical display unit (2) which is designed to present a piece of information for a user,
a touch-sensitive interface (3) which is designed to detect a touch (10-12) by the user, wherein coordinates from information presented on the display unit (2) are associated with coordinates of the touch-sensitive interface (3), and
a control unit (4) which is coupled to the display unit (2) and to the touch-sensitive interface (3) and which is designed
- to present at least one operator control panel (5-9) on the display unit (2), wherein the at least one operator control panel (5-9) is provided for the user to touch (10-12) in order to operate an operator control function,
- to detect a touch (10-12) on the touch-sensitive interface (3) by the user,
- to determine whether the at least one operator control panel (5-9) has been hit during the touch (10-12) by comparing the coordinates of the touch (10-12) with the coordinates of the at least one operator control panel (5-9), and
- to present the at least one operator control panel (5-9) in enlarged form on the display unit (2) if it has been determined that no operator control panel (5-9) has been hit, wherein precisely one operator control panel (5) is presented in enlarged form such that it comprises the coordinates of the touch (10),
**Characterized in that** the control unit (4) is designed to determine a frequency for the enlarged presentation of the at least one operator control panel (5-9), to store said frequency and to integrate it over a predetermined time period and to present the operator control panels in principle in enlarged form on the basis of the integrated frequency.

5. Operator control system according to Claim 4, **characterized in that** the operator control system (1) is designed to perform the method according to one of Claims 2-3.

## Revendications

1. Procédé de fonctionnement d'un système de commande pour un véhicule, dans lequel le système de commande (1) comprend une unité d'affichage graphique (2) et une surface tactile (3), dans lequel des coordonnées d'informations représentées sur l'unité d'affichage (2) sont associées à des coordonnées de la surface tactile (3), dans lequel le procédé comprend les opérations suivantes:
- représenter au moins une zone de commande (5-9) sur l'unité d'affichage (2), dans lequel ladite au moins une zone de commande (5-9) est prévue pour un contact (10-12) par un utilisateur en vue d'actionner une fonction de commande,
- détecter un contact (10-12) de la surface tactile (3) par l'utilisateur,
- déterminer si ladite au moins une zone de commande (5-9) a été touchée lors du contact (10-12), en comparant les coordonnées du contact (10-12) avec les coordonnées de ladite au moins une zone de commande (5-9), et
- représenter sous forme agrandie ladite au moins une zone de commande (5-9), lorsqu'aucune zone de commande (5-9) n'a été touchée, dans lequel on représente sous forme agrandie exactement une zone de commande (5), de telle manière qu'elle comprenne les coordonnées du contact (10),
**caractérisé en ce que** le système de commande (1) détermine une fréquence de la représentation agrandie de ladite au moins une zone de commande (5-9), la mémorise et l'intègre sur une durée prédéterminée, et représente en principe sous forme agrandie les zones de commande en fonction de la fréquence intégrée.

2. Procédé selon la revendication 1, **caractérisé en ce que** ladite exactement une zone de commande (5) est la zone de commande (5) située le plus près des coordonnées du contact (10-12).

3. Procédé selon la revendication 1 ou 2, **caractérisé en ce que** le système de commande (1) représente sous forme encore agrandie ladite au moins une zone de commande (5-9), lorsqu'aucune zone de commande (5-9) n'a été touchée lors du contact (10-12) et lors d'un autre contact (10-12).

4. Système de commande pour un véhicule, comprenant:
- une unité d'affichage graphique (2), qui est configurée pour représenter une information pour un utilisateur,
- une surface tactile (3), qui est configurée pour détecter un contact (10-12) par l'utilisateur, dans lequel des coordonnées d'informations représentées sur l'unité d'affichage (2) sont associées à des coordonnées de la surface tactile (3), et
- une unité de commande (4), qui est couplée à l'unité d'affichage (2) et à la surface tactile (3) et qui est configurée pour
- représenter au moins une zone de commande (5-9) sur l'unité d'affichage (2), dans lequel ladite au moins une zone de commande (5-9) est prévue pour un contact (10-12) par l'utilisateur en vue d'actionner une fonction de commande,
- détecter un contact (10-12) de la surface tactile (3) par l'utilisateur,
- déterminer si ladite au moins une zone de commande (5-9) a été touchée lors du contact (10-12), en comparant les coordonnées du contact (10-12) avec les coordonnées de ladite au moins une zone de commande (5-9), et
- représenter ladite au moins une zone de commande (5-9) sous forme agrandie sur l'unité d'affichage (2), lorsqu'il a été déterminé qu'aucune zone de commande (5-9) n'a été touchée, dans lequel on représente exactement une zone de commande (5) sous forme agrandie, de telle manière qu'elle comprenne les coordonnées du contact (10),
**caractérisé en ce que** l'unité de commande (4) est configurée pour déterminer une fréquence de la représentation agrandie de ladite au moins une zone de commande (5-9), la mémoriser et l'intégrer sur une durée prédéterminée, et pour représenter les zones de commande en principe sous forme agrandie en fonction de la fréquence intégrée.

5. Système de commande selon la revendication 4, **caractérisé en ce que** le système de commande (1) est configuré pour exécuter le procédé selon une des revendications 2-3.
